# NEUE EUROPÄISCHE PATENTSCHRIFT

(11) **EP 1 503 107 B2**
(45) Veröffentlichungstag und Bekanntmachung des Hinweises auf die Entscheidung über den Einspruch: **25.09.2013**
(45) Hinweis auf die Patenterteilung: 16.01.2008
(21) Anmeldenummer: 04026502.7
(22) Anmeldetag: 15.04.2002
(51) Int. Cl.: F16G 13/16

(54) **Gelenkelement für Energieführungskette**
Articulation device for energy carriers supporting chain
Elément d'articulation pour chaîne porteuse de lignes de transport d'énergie

(30) Priorität: 23.04.2001 DE 20107003 U
(43) Veröffentlichungstag der Anmeldung: 02.02.2005
(62) Teilanmeldung aus: 02735042.0
(73) Patentinhaber: igus GmbH, 51147 Köln (DE)
(72) Erfinder: Hermey, Andreas, 53773 Hennef (DE); Blase, Frank, 51429 Bergisch Gladbach (DE)
(74) Vertreter: Gudat, Axel

(56) Entgegenhaltungen:
- EP-A- 0 789 167
- US-A- 5 980 409

## Beschreibung

Die Erfindung betrifft ein Gelenkelement für eine Energieführungskette zur Führung von Schläuchen, Kabel oder dergleichen mit einer Anzahl von gelenkig miteinander verbundenen Kettengliedern, wobei die Kettenglieder gegenüberliegende Laschen mit inneren und äußeren Seitenflächen und dazu senkrechten und zur Längsrichtung der Kette im wesentlichen parallelen Schmalflächen aufweisen, wobei das Gelenkelement angepasst ist, benachbarte Kettenglieder jeweils gelenkig miteinander zu verbinden, wobei das Gelenkelement zwischen den Schmalflächen der Laschen benachbarter Kettenglieder anordenbar ist und die Energieführungskette unter Bildung eines Untertrums, eines Umlenkbereichs und eines Obertrums verfahrbar ist.

Energieführungsketten als solche sind vielfältig bekannt, wobei zur Herstellung der Gelenkverbindung die benachbarten Laschen seitliche Überlappungsbereiche aufweisen, die mit Gelenkbolzen und korrespondierenden Ausnehmungen versehen sind. Die Gelenkverbindung ist auf halber Höhe der Laschen angeordnet. Eine derartige Energieführungskette ist beispielsweise aus der EP 0 803 032 B1 bekannt. Obwohl sich derartige Energieführungsketten prinzipiell sehr bewährt haben, weisen sie den Nachteil auf, dass die Gelenkverbindungen aus Gelenkzapfen und korrespondierender Aufnahme aufgrund von Reibungskräften einem Verschleiß unterliegen. Dieser Verschleiß führt zu einem gewissen Reparatur- bzw. Wartungsbedarf an der Energieführungskette und ist des Weiteren bei bestimmten Anwendungsgebieten wie beispielsweise im Bereich der Lebensmittelherstellung oder der Produktion von Einrichtungen unter Reinraumbedingungen wie beispielsweise von Halbleiterprodukten unerwünscht.

Des Weiteren sind beispielsweise aus der EP 0 789 167 A1 Leitungsführungseinrichtungen bekannt, bei welchen die Kettenglieder durch ein langgestrecktes flexibles Band entsprechend dem Oberbegriff des Anspruchs 1 miteinander gelenkig verbunden sind, so dass die Verfahrung der Leitungsführungseinrichtung praktisch abrieblos erfolgt. Da das langgestreckte Band an den die Laschen eines Kettengliedes verbindenden Querstegen befestigt ist, sind die Gelenkverbindungen der Kettenglieder im Bereich der unteren Enden der Laschen angeordnet. Damit ist die neutrale Faser der Leitungsführungseinrichtung, die bei der Umlenkung der Leitungsführungseinrichtung im Gegensatz zu den in der Höhe von den Gelenkverbindungen beabstandeten Bereichen keine Längenänderung erfährt, ebenfalls am unteren Ende der Kettenlaschen angeordnet. Dies ist jedoch für verschiedene Anwendungsfälle nachteilig.

Die EP 0 789 167 A1 beschreibt eine Leitungsführung bestehend aus einzelnen gegeneinander verschwenkbaren Kettengliedern und einem innerhalb der Kettenglieder zwischen den einander gegenüberliegenden Laschen derselben angeordnetem Gelenkband.

Die US 5,980,409 beschreibt eine Energieführungskette, bei welcher die Kettenglieder durch korrespondierende, sich senkrecht zur Kettenlängsrichtung erstreckende Zapfen und Gelenkausnehmungen verbunden werden.

Der Erfindung liegt somit die Aufgabe zugrunde, ein Gelenkelement für eine Energieführungskette zu schaffen, welches zwischen den Schmalflächen der Kettenlaschen anordenbar ist, so dass die Energieführungskette verschleißarm und abrieblos verfahrbar und einfach und kostengünstig herstellbar ist.

Die Aufgabe wird erfindungsgemäß durch ein Gelenkelement mit den Merkmalen des Anspruchs 1 gelöst.
Vorteilhafte Ausführungsformen ergeben sich aus den Unteransprüchen.

Das erfindungsgemäße Gelenkelement wird im Folgenden im Zusammenhang mit einer Energieführungskette beschrieben.

Durch die Ausbildung der Energieführungskette mit einem erfindungsgemäßen Gelenkelement ist eine abrieblose Verfahrung der Kette möglich, wobei das Gelenkelement bezüglich Anordnung an den Laschen, Dimensionierung und insbesondere der Materialwahl den jeweiligen Anforderungen optimal und unabhängig von der Ausbildung der Laschen angepasst werden kann. So können die Laschen und die Gelenkelemente aus unterschiedlichen Materialien, insbesondere aus unterschiedlichen Kunststoffmaterialien, bestehen. Die Gelenkelemente können so aus einem Material mit hoher Dauerbiegefestigkeit, Kerbzähigkeit und/oder geeigneter Elastizität bestehen. Die elastischen Eigenschaften des Gelenkelementes sind so eingestellt, dass das Gelenkelement bei jeder bestimmungsgemäßen Biegebeanspruchung vorzugsweise im elastischen Bereich bleibt und, dass es bei einer Deformation elastische Rückstellkräfte auf die durch das Gelenkelement verbundenen Laschen ausübt. Das Material der Laschen kann eine besonders hohe Formstabilität (gegen Zug-, Torsions- und/oder Druckkräfte) und hohe Biegesteifigkeit der Laschen und auch der Kettenglieder insgesamt gewährleisten. Das Material kann besonders eine niedrige Gleitreibung aufweisen, was bei Energieführungsketten vorteilhaft ist, bei welchen bei der Verfahrung der Energieführungskette das Obertrum gleitend auf dem Untertrum geführt wird.

Erfindungsgemäß weist das Gelenkelement Haltebereiche auf, mit denen es an den benachbarten Laschen kraft-, form/und oder stoffschlüssig befestigbar ist. Ferner erstreckt es sich erfindungsgemäß in Montageanordnung zwischen der inneren und äußeren Seitenfläche der Laschen, so dass es hiervon seitlich nicht vorsteht. Aufgrund der erfindungsgemäßen separaten Ausführung von Laschen und Gelenkelementen können die Laschen so ausgebildet sein, dass sie nahezu sämtliche auf die Energieführungskette in Längsrichtung wirkenden Druck- und Zugkräfte aufnehmen, während die Funktion der Gelenkelemente sich ausschließlich auf die Bildung von Gelenkverbindungen ohne nennenswerte Beanspruchung durch Druck- und Zugkräfte beschränkt.

Vorzugsweise erstreckt sich das Gelenkelement gänzlich zwischen der inneren und äußeren Seitenfläche der Laschen. Die Breite der Gelenkelemente kann genau der Breite der Laschen auf Höhe der Gelenkelemente entsprechen, so dass von den Laschen seitlich vorstehende Bereiche der Gelenkelemente vermieden werden.

Die Kettenglieder können jeweils einen oberen und unteren Quersteg aufweisen, die den Zwischenraum der gegenüberliegenden Laschen nach außen abgrenzen, wobei einer der Querstege auch als geteilter Quersteg ausgeführt sein kann. Bei Verwendung hintergreifender Anschläge ist es auch möglich, nur jedes zweite oder dritte usw. Kettenglied innerhalb der Kette mit Querstegen zu versehen. Der die gegenüberliegenden Laschen verbindende Quersteg kann an den Laschen einstückig angeformt oder lösbar, insbesondere mittels geeigneter Rastverbindungen oder anderer Befestigungselemente befestigt sein. Vorzugsweise ist zumindest einer der Querstege biegesteif ausgeführt und biegesteif an den gegenüberliegenden Laschen befestigt.

Vorzugsweise ist das Gelenkelement bei in Montageanordnung langgestreckter Energieführungskette in der Höhe zwischen dem oberen und unteren Quersteg, falls vorhanden, oder den Befestigungselementen für Querstege und in der Höhe von den Querstegen beabstandet angeordnet, insbesondere in einem mittleren Bereich der Laschenhöhe, der von der Unterkante der Laschen um mehr als ein Viertel der Laschenhöhe beabstandet ist. Insbesondere kann das Gelenkelement auf halber Höhe der Laschen angeordnet sein. Hierdurch können die Kettenglieder symmetrisch zu der neutralen Faser der Energieführungskette angeordnet sein, wobei die neutrale Faser bei der Umlenkbewegung der Kette aus der gestreckten in die gekrümmte Anordnung keine Längenänderung erfährt. Dies ist für verschiedene Anwendungszwecke vorteilhaft, da die geführten Leitungen bei der Abwinkelungsbewegung der Energieführungskette gleichmäßiger beansprucht werden.

Vorzugsweise weisen die Kettenglieder Mittel zur Geräuschdämpfung der bei der Betätigung der Anschläge entstehenden Geräusche auf. Die Geräuschdämpfungsmittel sind vorzugsweise als Bremsen ausgeführt, die im Bereich der Anschläge und/oder der korrespondierenden Anschlagflächen angeordnet sind. Die Geräuschdämpfungsmittel können insbesondere in die Anschläge aufnehmenden Taschen der korrespondierenden Lasche angeordnet sein. Die Anschlagflächen, die zugleich die Taschen an den Laschenstirnseiten begrenzen und daher stegartig ausgeführt sein können, können federnd ausgebildet sein, beispielsweise durch geeignete Materialwahl oder Materialstärke, wobei das Material der Anschlagflächen ein höheres Elastizitätsmodul als das Material der angrenzenden Laschenbereiche aufweisen kann. Alternativ und/oder zusätzlich können die Anschläge selber federnd ausgebildet sein, beispielsweise zumindest teilweise aus einem Material erhöhter Elastizität bestehen. Es können an den Anschlägen und/oder korrespondierenden Anschlagflächen, vorzugsweise innerhalb den die Anschläge aufnehmenden Taschen, auch separate Dämpfungselemente, beispielsweise in Form von Dämpfungsstreifen aus einem geräuschdämpfenden Material, vorgesehen sein. Die Anschläge und die korrespondierenden Anschlagflächen können zusätzlich oder alternativ auch eine Gestalt aufweisen, so dass ein erster Teilbereich eines Anschlages mit einem ersten Teilbereich der korrespondierenden Anschlagfläche zu einem ersten Zeitpunkt und ein zweiter Teilbereich des Anschlages mit einem zweiten Teilbereich der Anschlagfläche zu einem späteren Zeitpunkt zur Anlage kommt, so dass am Ende des Anschlagvorganges die gesamte Wirkfläche des Anschlages mit der korrespondierenden Anschlagfläche anliegt.

Die Gelenkelemente sind als Federelemente ausgeführt, die bei Abbiegung aus ihrer Lunggestreckten Ruhestellung bzw. einer Abwinkelung der Kettenglieder aus der Stellung bei langgestreckter Energieführungskette elastische Rückstellkräfte auf die benachbarten Kettenglieder ausüben. Hierdurch wird eine Geräuschdämpfung bei der Fahrbewegung der Energieführungskette erzielt. Vorzugsweise wird durch die elastischen Rückstellkräfte eine Rückstellbewegung der Kettenglieder über den gesamten Verschwenkwinkel der Kettenglieder ausgeübt. Die Rückstellkräfte können eine Höhe annehmen, dass eine Rückstellbewegung der Kettenglieder bis in die Anschlagstellung der Kettenglieder bei langgestreckter Energieführungskette selbsttätig erfolgt. Dies kann für die unbeladene als auch für die mit mindestens einer zu führenden Einrichtung wie einem Schlauch, einer Leitung oder dergleichen beladenen Energieführungskette oder für die maximal beladene Energieführungskette gelten.

Die Gelenkelemente können vielgestaltig ausgeführt sein. Sie können zwischen den Haltebereichen einen sich ändernden Querschnitt und/oder Bereiche unterschiedlicher Materialstärke aufweisen. Der Querschnitt und/oder die Materialstärke nehmen mit Abstand von den Haltebereichen vorzugsweise zu und können im mittleren Bereich des Gelenkelementes maximal sein. Der Querschnitt und/oder Materialstärke können auch ausgehend von dem jeweiligen Haltebereich in einem ersten Abschnitt konstant sein und ab einem Abstand von dem Haltebereich variieren, insbesondere in dem Querschnitt und/oder der Materialstärke zunehmen oder eine Materialschwächung, beispielsweise eine Einschnürung oder einen inneren Hohlraum aufweisen. Die Änderung des Querschnittes und/oder der Materialstärke erfolgen vorzugsweise in der Hauptebene der zugehörigen Kettenlaschen. Eine Querschnittsänderung kann insbesondere durch einen Höhenund/oder Seitenversatz eines Bereiches des Gelenkelementes erfolgen. Eine Materialschwächung kann bei konstantem oder sich ändernden Querschnitt des jeweiligen Bereiches des Gelenkelementes erfolgen, wobei der Querschnitt zu- oder abnehmen kann. So kann ein innerer Hohlraum bei konstanten oder sich änderndem Querschnitt des Gelenkelementes vorgesehen sein, es kann auch ein geschlossener oder offener, insbesondere in Montagelage seitlich offener Hohlraum vorgesehen sein, der einer Materialteilung, bei der verschiedene Stränge mit insgesamt konstanter Materialstärke ausgebildet werden, entsprechen kann.

Die einzelnen Stränge können unterschiedliche Formen aufweisen und beispielsweise geradlinig oder gebogen ausgeführt sein und Ein- und/oder Ausbauchungen aufweisen, wobei beliebige Kombinationen möglich sind. Die Änderung des Querschnittes und/oder der Materialstärke kann jeweils kontinuierlich oder stufenweise erfolgen. Durch die verschiedene Ausgestaltung der Gelenkelemente können die Verfahreigenschaften der Energieführungskette eingestellt werden, z.B. die zur Abwinkelung der Laschen erforderliche Kraft, deren Änderung bei sich änderndem Verschwenkwinkel oder die Geräuschdämpfungseigenschaften der Gelenkelemente, die auf der Ausübung von Rückstellkräften bei der Abwinkelung beruhen können. Dies ist insbesondere bei austauschbaren Gelenkelementen von Bedeutung.

Bei Ausführung des Gelenkelementes als Federelement können die Kettenglieder jeweils mit Anlageflächen versehen sein, die über den gesamten Verschwenkwinkel an dem Gelenkelement angreifen und hierbei die bei der elastischen Deformation des Gelenkelementes aufgrund der Abwinkelung der Kettenglieder auf die Kettenglieder wirkenden elastischen Rückstellkräfte aufnehmen. Vorzugsweise ist das Gelenkelement im Presssitz zwischen den Anlageflächen angeordnet. Die Anlageflächen der Laschen sowie die korrespondierenden Flächen des Gelenkelementes stellen vorzugsweise ebene Flächen dar, deren Flächennormalen parallel zur inneren und äußeren Seitenfläche der Laschen liegen und die bei langgestreckter Energieführungskette senkrecht zur Längsrichtung derselben stehen.

Das Gelenkelement kann auch als in der Ebene parallel zu der inneren und äußeren Seitenfläche der Laschen gekrümmtes Bauteil ausgebildet sein, so dass es bei in Längsrichtung geradem Einbau in die Laschen eine Vorspannung in einer Abwinkelungsrichtung bewirkt.

Das Gelenkelement kann mit Haltebereichen an beiden benachbarten Seitenlaschen angreifen, die in Längsrichtung der Energieführungskette wirkende Zugkräfte aufnehmen. Hierzu kann das Gelenkelement an den benachbarten Laschen kraft-, form- und/oder stoffschlüssig befestigt sein. Die zugaufnehmende Befestigung der Gelenkelemente an den Laschen kann derart ausgeführt sein, dass diese lediglich für geringe Zugkräfte ausgelegt ist, beispielsweise um die Montage der Energieführungskette zu erleichtern. Hierzu können die Haltebereiche der Gelenkelemente, vorzugsweise an den freien, den elastisch deformierbaren Bereichen abgewandten Enden derselben, ober- und unterseitige Vorsprünge aufweisen, die sich über die gesamte Breite der Gelenkelemente erstrecken können. Zur Aufnahme höherer Zugkräfte können bei Bedarf zusätzliche zugaufnehmende Mittel vorgesehen sein.

Das jeweilige Gelenkelement kann zur gelenkigen Verbindung von genau zwei einander in Längsrichtung der Energieführungskette benachbarten Kettengliedern ausgeführt sein. Das Gelenkelement kann auch mehrere Kettenglieder gelenkig miteinander verbinden und sich hierzu über die Länge einer Vielzahl von Kettengliedern, beispielsweise drei bis zehn oder mehr Kettengliedern erstrecken. Es können somit mehrere in Längsrichtung der Energieführungskette aufeinander folgende Gelenkelemente vorgesehen sein, die jeweils nur Kettenglieder eines Abschnittes der Energieführungskette gelenkig miteinander verbinden. Hierdurch muss bei einem notwendigen Austausch eines Gelenkelementes nicht die gesamte Energieführungskette, sondern nur ein Teilbereich derselben demontiert werden. Die Gelenkelemente können sich gegebenenfalls auch jeweils über die gesamte Länge der Energieführungskette erstrecken. Verbindet das Gelenkelement jeweils mehr als zwei Kettenglieder miteinander, so können jeweils zwischen den Haltebereichen der Gelenkelemente, mit denen diese an den beiden benachbarten Kettengliedern verbunden sind, Verbindungsbereiche vorgesehen sein, die eine geringere Breite als die Laschen und/oder als die elastisch deformierbaren Bereiche der Gelenkelemente aufweisen. Hierdurch können die sich über mehrere Laschen erstreckenden Gelenkelemente einteilig gehandhabt werden. Die Verbindungsbereiche können im Querschnittsbereich der Laschen angeordnet sein und außenseitig an den Kettengliedern abschließen. Die ober- und unterhalb der Gelenkelemente angeordneten Bereiche der Laschen können hierbei durch einen Steg verbunden sein, so dass die Laschen einstückig ausgebildet sind.

Vorzugsweise sind die Gelenkelemente in Ausnehmungen der Kettenlaschen angeordnet. Die Ausnehmungen sind vorzugsweise stirnseitig in Richtung auf die benachbarte Lasche, die durch das jeweilige Gelenkelement verbunden wird, geöffnet. Zusätzlich oder alternativ hierzu und unabhängig von der Länge der Gelenkelemente können die die Gelenkelemente aufnehmenden Ausnehmungen an den Kettenlaschen an den Seitenflächen, die dem Energieführungsketteninneren zu- und/oder abgewandt sind, hin geöffnet sein, so dass die Gelenkelemente in einer Richtung quer, vorzugsweise senkrecht, zu der Hauptebene bzw. den Seitenflächen der Laschen in die Ausnehmungen einführbar und an den Laschen befestigbar sind.

Das Gelenkelement kann auch durch kraftschlüssige, formschlüssige und/oder stoffschlüssige Verbindung mit den Laschen gegen eine Demontage von den Laschen senkrecht zur Hauptebene der Laschen und/oder gegen eine Verdrehung quer zu den Laschen an diesen gesichert sein, insbesondere wenn das Gelenkelement in einer seitlich offenen Ausnehmung der Laschen angeordnet ist.

Vorzugsweise weist jeweils zumindest eine, vorzugsweise beide, der jeweils benachbarten Laschen an der der benachbarten Lasche zugeordneten Stirnseite auf Höhe des Gelenkelementes eine stirnseitig offene Ausnehmungen auf, durch die sich das Gelenkelement erstreckt. Die Ausnehmung erstreckt sich zumindest ausgehend von der gestreckten Anordnung der Energieführungskette auf der der Abwinkelungsrichtung der Glieder zugewandten Seite der Gelenkelemente, vorzugsweise beidseitig der Gelenkelemente. Durch dieses Spiel wird eine Verbiegung des Gelenkelementes in Art einer Blattfeder ermöglicht, bei welchem der mittlere Bereich des elastisch deformierbaren Bereichs des Gelenkelementes einen geringfügigen Höhenversatz gegenüber den beiden benachbarten Laschen während der Verschwenkbewegung durchführt. Hierdurch ergibt sich eine ruhigere und geräuschärmere Abrollbewegung der Energieführungskette.

Die Ausnehmung erstreckt sich vorzugsweise ausgehend von dem Gelenkelement auf Höhe der Verschwenkachse der benachbarten Laschen zueinander, vorzugsweise in der Höhe der Laschen und/oder in Längsrichtung der Energieführungskette über mehr als die halbe oder mehr als die doppelte Stärke des Gelenkelementes, beispielsweise über etwa die drei- bis fünffache Stärke des Gelenkelementes oder mehr. Die sich durch die beiden einander zugewandten Ausnehmungen der benachbarten Laschen ergebende Ausnehmung kann eine kreisförmige, elliptische oder andere geeignete Gestalt aufweisen. Die Längserstreckung der Ausnehmung kann 20 bis 60 %, vorzugsweise 35 bis 45 %, z. B. ca. 40 % der Länge des Gelenkelementes bzw. des Abstandes der das Gelenkelement an den Laschen sichernden Formschlussmittel betragen. Vorteilhafterweise erstreckt sich die Ausnehmung ausgehend von dem Gelenkelement nur über einen Teilbereich der Laschenhöhe und endet in einem Abstand von der Ober- bzw. Unterkante der Lasche.

Die einander benachbarten Laschen weisen vorzugsweise zusammenwirkende Mittel auf, die auf die Energieführungskette wirkende Druck- und/oder Zugkräfte aufnehmen. Hierdurch erfolgt eine Druck- und/oder Zugentlastung der Verbindungsbereiche der Gelenkelemente mit den Laschen. Vorzugsweise sind die druckund/oder zugkraftaufnehmenden Mittel als korrespondierende Vorsprünge und hinterschnittene Bereiche in Form von Ausnehmungen der benachbarten Laschen ausgebildet. Die Vorsprünge sind vorzugsweise an den innen bzw. außen liegenden Seiten der Laschen angeordnet und erstrecken sich seitlich von diesen in Richtung auf das Innere der Energieführungskette oder in entgegengesetzter Richtung. Die Ausnehmungen zur Aufnahme der Vorsprünge sind in Kettenlängsrichtung durch ein druck- und/oder zugkraftaufnehmendes Widerlager für die Vorsprünge begrenzt, so dass in Längsrichtung der Kette Zug- und/oder Druckkräfte aufgenommen werden können. Die Ausnehmung kann teilumfänglich oder vollumfänglich geschlossen sein. Die zug- und/oder druckaufnehmenden korrespondierenden Bereiche der benachbarten Laschen können auch als korrespondierende Anschläge zur Begrenzung des Verschwenkwinkels der benachbarten Kettenglieder zueinander ausgeführt sein.

Vorteilhafterweise weisen die Laschen in Richtung auf die benachbarten Laschen vorspringende, diese seitlich umgreifende Überlappungsbereiche auf. Vorzugsweise sind die Überlappungsbereiche an jeder Lasche ober- und unterhalb der Gelenkelemente vorgesehen. Die Überlappungsbereiche können hierbei von einem bezüglich der Kettenlängsrichtung mittleren Bereich der Laschen ausgehen, dessen Wandstärke größer als die Wandstärke der Überlappungsbereiche ist. Durch die Überlappungsbereiche wird die Seitenstabilität der Energieführungskette beträchtlich erhöht.

Vorzugsweise sind die einer benachbarten Lasche zugeordneten Überlappungsbereiche einer gegebenen Lasche, die ober- und unterhalb des Gelenkelementes angeordnet sind, durch eine dem Mittelbereich der Lasche gegenüberliegende Aussparung voneinander getrennt, wobei sich die Aussparung über die gesamte Laschenbreite erstreckt. Die Aussparung erstreckt sich vorzugsweise auch auf Höhe des jeweiligen Gelenkelementes und kann bezogen auf einen durch den Gelenkelementmittelpunkt geschlagenen in der Laschenhauptebene liegenden Kreis eine kreissegmentförmige Gestalt aufweisen. Hierdurch kann die Länge der Lasche und damit auch deren Gewicht wesentlich reduziert werden. Die Überlappungsbereiche erstrecken sich vorzugsweise im Wesentlichen über lediglich den Verschwenkwinkel der Laschen zuzüglich der Wandstärke von Vorsprüngen bzw. mit diesen korrespondierenden Anlagebereichen, die den Verschwenkwinkel begrenzen oder als zug- und/oder druckkraftaufnehmende Mittel fungieren. Diese Bereiche sind vorzugsweise stegartig ausgeführt und erstrecken sich senkrecht zur Verschwenkrichtung der Laschen.

Des Weiteren sind die einer benachbarten Lasche zugewandten ober- und unterhalb des Gelenkelementes angeordneten Überlappungsbereiche vorzugsweise an unterschiedlichen Seiten der Laschen, d. h. an der außen bzw. innen liegenden Seitenfläche, bzw. auf unterschiedlichen Seiten der Mittelhauptebene der Laschen angeordnet. Hierunter sollen auch Anordnungen erfasst sein, bei denen die Überlappungsbereiche von den am weitesten außen bzw. innen liegenden Bereichen der Laschen, z. B. etwaigen Dickstellenbereichen, einen lateralen Abstand aufweisen. Die Überlappungsbereiche weisen somit einen seitlichen Versatz zueinander auf. Die korrespondierenden Überlappungsbereiche der benachbarten Laschen liegen hierbei vorzugsweise nur jeweils einem Überlappungsbereich der jeweils benachbarten Lasche seitlich gegenüber. Hierdurch wird die Seitenstabilität der Energieführungskette zusätzlich erhöht. Insbesondere können an zumindest einem oder an beiden der obigen genannten Überlappungsbereiche seitwärts in Richtung auf den korrespondierenden Überlappungsbereich der benachbarten Lasche vorstehende Vorsprünge vorgesehen sein, die beispielsweise als Anschläge oder als Zugentlastungsmittel bzw. als Druckkraftaufnahmemittel ausgeführt sein können, ohne hierauf beschränkt zu sein, so dass die benachbarten Laschen zur Montage um deren Längsachsen verkippt oder verschränkt stirnseitig miteinander zur Anlage gebracht werden und anschließend um deren Längsachsen verdreht werden, um die bezüglich der Mittelhauptebene einander gegenüberliegenden Überlappungsbereiche seitlich miteinander zur Anlage zu bringen, wobei die Vorsprünge einander hintergreifen. Durch diese Anordnung wird eine Energieführungskette besonders hoher Torsionsstabilität geschaffen.

Die einer benachbarten Lasche zugewandten Überlappungsbereiche können jedoch auch, wie bei herkömmlichen Gliederketten, auf derselben Seite der Laschenmittelebene angeordnet sein.

Die jeweils außenseitig bzw. jeweils innenseitig an der Lasche angeordneten Überlappungsbereiche können einander diametral gegenüberliegend angeordnet sein, so dass einer der Überlappungsbereiche oberhalb und ein anderer unterhalb der Gelenkverbindung angeordnet ist.

Anordnung und Geometrie der Überlappungsbereiche können vielfältig variiert werden. Eine besonders vorteilhafte Ausgestaltung liegt vor, wenn die Laschen mit zumindest zwei Überlappungsbereichen versehen sind, die der jeweils benachbarten Lasche zugewandte freie Stirnseiten mit zu einer senkrecht zur Kettenlängsrichtung stehenden, in der Laschenhauptebene liegenden Richtung R unterschiedlichen Winkeln W1, W2 aufweisen. Die Stirnseiten stehen hierbei vorzugsweise im Wesentlichen senkrecht zur Verschwenkrichtung der benachbarten Kettenglieder zueinander. Vorzugsweise sind die Überlappungsbereiche mit unterschiedlich geneigten Stirnseiten nur einer benachbarten Lasche zugeordnet. Hierbei können die Laschen jeweils 4 Überlappungsbereiche aufweisen, die jeweils einer benachbarten Lasche zugewandt sind, wobei die Stirnseiten von drei oder weniger der Überlappungsbereiche senkrecht oder im Wesentlichen senkrecht zur Kettenlängsrichtung stehen und die Stirnseite zumindest eines oder mehrer der Überlappungsbereiche schräg zur Kettenlängsrichtung verlaufen. Der stirnseitige Winkel zur senkrecht zur Kettenlängsrichtung verlaufenden Richtung kann hierbei ca. 15-60°, vorzugsweise ca. 30° betragen. Insbesondere können an jeweils einer Lasche zwei unterschiedliche Arten von Überlappungsbereichen ausgeführt sein, die jeweils eine unterschiedliche Winkelerstreckung von der oben definierten Senkrechten aufweisen. Hierbei können sämtliche Überlappungsbereiche sich über den gleichen Verschwenkwinkel erstrecken, der im Wesentlichen dem maximalen Verschwenkwinkel der benachbarten Kettenglieder zueinander entspricht.

Vorzugsweise sind die benachbarten Laschen mit mindestens einem Vorsprung versehen, der von einem Bereich der benachbarten Lasche mit geringem oder ohne Spiel übergriffen wird, wodurch ein Höhenversatz der Laschen zueinander verhindert wird. Das Spiel ist vorzugsweise derart bemessen, dass die Bereiche bei der Verschwenkbewegung der Kettenglieder ohne Kontaktierung aneinander geführt werden, wodurch ein Abrieb verhindert wird. Bei einer Krafteinwirkung auf die Laschen, die einen Höhenversatz der Laschen zueinander bedingt, kommen die einander übergreifenden Bereiche der benachbarten Laschen miteinander zum Angriff, wodurch der Höhenversatz beschränkt wird. Vorzugsweise übergreifen die genannten Bereiche der benachbarten Laschen einander über den gesamten Verschwenkwinkel, so dass über den gesamten Verschwenkwinkel ein Höhenversatz der Laschen zueinander verhindert wird. Das Spiel kann zumindest in einer oder beiden Anschlagstellungen der Kettenglieder auf null reduziert sein. Die den Höhenversatz verhindernden Vorsprünge können gleichzeitig als Anschlagmittel fungieren. Sie können an den Überlappungsbereichen oder an dem Mittelbereich der Laschen angeordnet sein und seitlich von den Laschen nach innen oder außen vorstehen oder sich in der Hauptebene der Laschen erstrecken. Die Vorsprünge können im Bereich der Oberkante der Laschen, benachbart den Gelenkelementen oder an anderer geeigneter Stelle angeordnet sein.

Ferner sind vorzugsweise an benachbarten Laschen miteinander wechselwirkende Anschläge vorgesehen, die den Verschwenkwinkel der Laschen in beiden Verschwenkendstellungen begrenzen. Die Anschläge können als Vorsprünge ausgeführt sein, die sich in der Hauptebene der Laschen erstrecken und hierbei in Längsrichtung der Energieführungskette von dem mittleren Laschenbereich, an dem Überlappungsbereiche angeformt sein können, vorspringen. Die Anschläge können sich zugleich seitlich an die Überlappungsbereiche anschließen. Selbstverständlich können auch andere geeignete Anschläge vorgesehen sein.

Vorzugsweise sind die Anschläge unmittelbar benachbart den Gelenkelementen angeordnet, wodurch die Anschläge mit nur geringer Bogengeschwindigkeit aufeinander auftreffen, so dass die Energieführungskette geräuscharm verfahren werden kann. Vorzugsweise sind die Anschläge unmittelbar radial außen liegend zu Ausnehmungen angeordnet, die das jeweilige Gelenkelement mit Spiel umgeben, um die Abwinkelung des Gelenkelementes zu erleichtern. Vorzugsweise sind die Anschläge an der dem Energieführungsketteninneren zugewandten Seite der Mittelbereiche der Laschen angeordnet und können mit dem benachbarten Überlappungsbereich eine gemeinsame Seitenfläche aufweisen. Die Wandstärke des Anschlages entspricht somit in etwa der halben Wandstärke des gleichen Mittelbereichs.

Die Laschen eines Kettengliedes können in Art von gekröpften Laschen, die spiegelsymmetrisch zueinander sein können, ausgeführt sein. Die Energieführungskette kann auch durch gegenüberliegende Laschenstränge aus alternierenden Innen- und Außenlaschen oder in anderer geeigneter Weise, z. B. durch gabelförmige Laschen, aufgebaut sein.

Die Erfindung wird nachfolgend beispielhaft beschrieben und anhand der Figuren beispielhaft erläutert. Es zeigen:
- Fig. 1: eine perspektivische Darstellung einer erfindungsgemäßen Energieführungskette,
- Fig. 2: eine Darstellung einer ersten Lasche eines Kettengliedes der Energieführungskette nach Figur 1 in Seitenansicht (Figur 2a, c) in Draufsicht (Figur 2b) und in perspektivischer Darstellung (Figur 2d, e),
- Fig. 3: eine perspektivische Darstellung einer weiteren Ausführungsform einer erfindungsgemäßen Energieführungskette,
- Fig. 4: Seitenansicht eines Gelenkelementes nach einer weiteren Ausführungsform.
- Fig. 5: verschiedene Gelenkelemente in Seitenansicht und in Draufsicht.

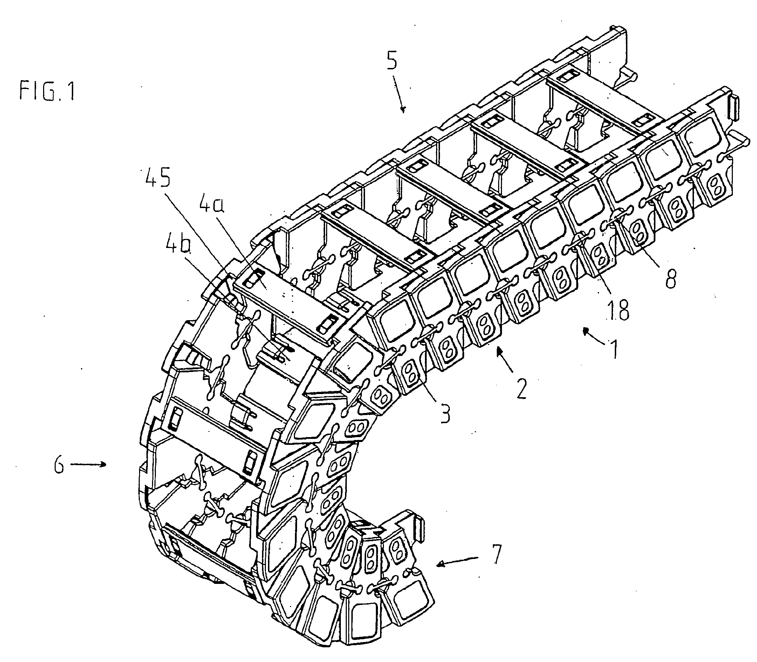

Die in Figur 1 gezeigte erfindungsgemäße Energieführungskette 1 besteht aus einer Vielzahl gelenkig miteinander verbundener Kettenglieder 2, die jeweils aus zwei parallel zueinander angeordneten, spiegelsymmetrisch zueinander ausgeführten Laschen 3 bestehen, welche durch jeweils einen oberen und unteren Quersteg 4a,4b miteinander verbunden sind. Die Querstege 4a,4b sind nach dem Ausführungsbeispiel durch Rastmittel lösbar an den Laschen 3 befestigt. Durch die formstabilen Laschen und zumindest einen biegesteifen Quersteg, der stabil an den Laschen befestigt ist, werden formstabile, verdreh- und torsionssteife Kettenglieder gebildet. Nach dem Ausführungsbeispiel kann zumindest einer der Querstege zumindest teilweise das Innere der Energieführungskette freigeben, um die zu führenden Schläuche, Kabel oder dergleichen in dem durch die Laschen und Querstege definierten Führungskanal der Energieführungskette anzuordnen. Die dargestellte Energieführungskette kann bogenförmig unter Bildung eines Untertrums 5, von dem lediglich eine Lasche des ersten Kettengliedes dargestellt ist, einem Umlenkbereich 6 und einem Obertrum 7 angeordnet werden.

Die Kettenglieder 2 sind durch Gelenkelemente 8 miteinander verbunden, die nach dem Ausführungsbeispiel jeweils genau zwei einander benachbarte Laschen 3 gelenkig miteinander verbinden, die alleine die Gelenkverbindung ausbilden. Die Gelenkelemente 8 sind als im Wesentlichen plattige Bauteile ausgeführt, die sich über die gesamte Breite der Laschen 3 erstrecken und bündig mit den innen und außen liegenden Seitenflächen 9, 10 abschließen. Die Breite und Länge der elastisch deformierbaren Bereiche der Gelenkelemente 8 beträgt hierbei ein Mehrfaches der Stärke derselben.

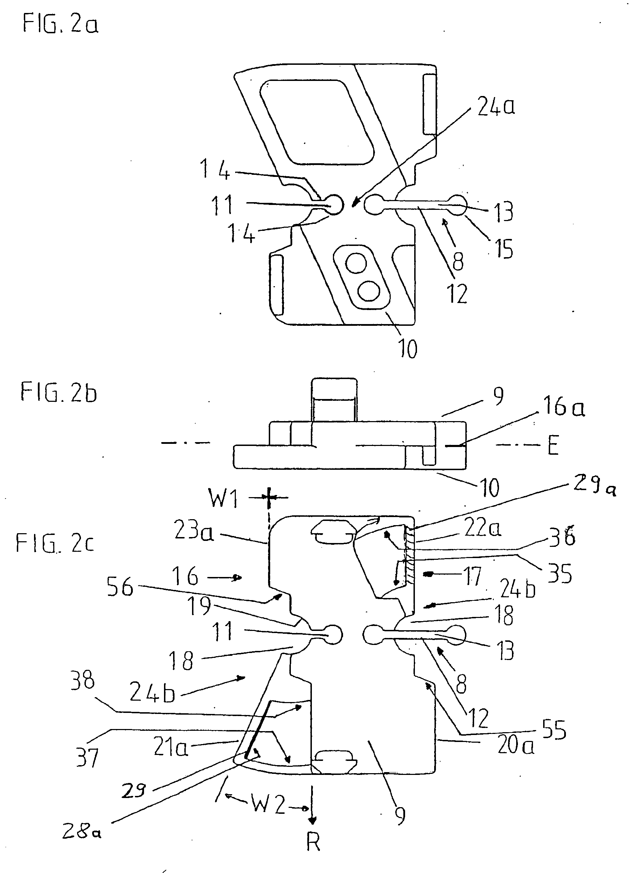

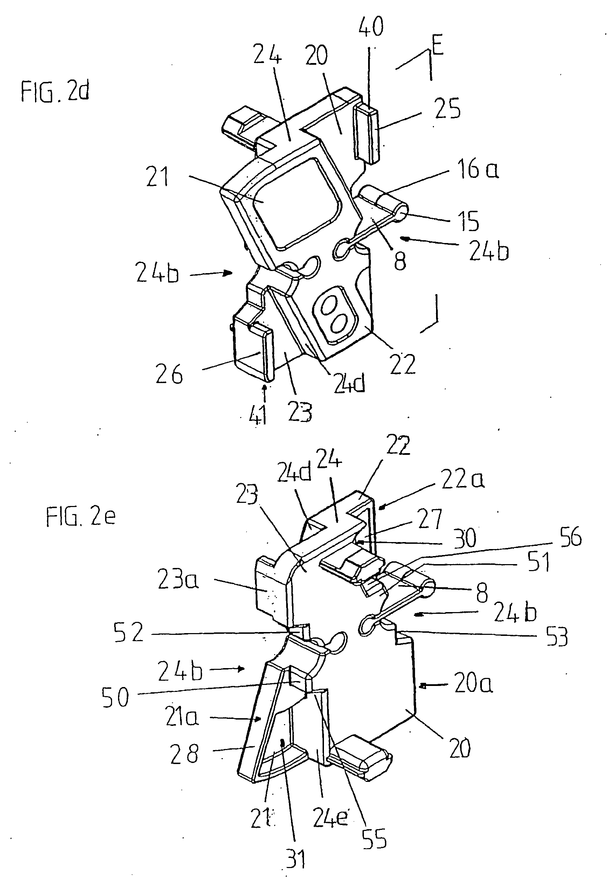

Wie auch aus Figur 2 ersichtlich ist, sind die Gelenkelemente 8 in seitlich offenen Ausnehmungen 11 der Laschen 3 angeordnet, wobei nach dem Ausführungsbeispiel die Ausnehmungen 11 sowohl zur inneren als auch äußeren Seitenfläche 9, 10 hin offen ausgeführt sind. Die Gelenkelemente 8 können somit seitlich zu den Laschen 3 in die Ausnehmungen 11 eingeführt und in diesen festgelegt werden. Das Gelenkelement 8 ist in Abwinkelungsrichtung der Kettenglieder elastisch deformierbar und in Art eines scharnierartigen Federelementes ausgeführt, das in Art einer Blattfeder wirkt. Das Gelenkelement 8 übt nach Abbiegung aus dessen langgestreckter Ruhestellung elastische Rückstellkräfte auf die benachbarten Kettenlaschen aus, so dass die Kettenlaschen vollständig in deren Ausgangsposition unter Ausbildung eines langgestreckten Abschnittes der Energieführungskette rücküberführt werden.

Das Gelenkelement 8 weist somit einen mittleren elastisch deformierbaren Bereich 12 auf, der zwischen den Stirnseiten der benachbarten Laschen 2 angeordnet ist und an den beidseitig Haltebereiche 13 angrenzen, die passgenau an den die Ausnehmung 11 begrenzenden Flächen 14 der Laschen 2 anliegen. Die Haltebereiche 13 weisen auf der dem mittleren Bereich 12 abgewandten Seite Querschnittserweiterungen 15 auf, die eine Hinterschneidung der Lasche hintergreifen, so dass die Gelenkelemente gegen Längsverschiebung gesichert in der Ausnehmung 11 angeordnet sind. Unabhängig hiervon sind die Gelenkelemente gegen eine Verschwenkung quer zu den Laschen gesichert, wozu ebenfalls Formschlussmittel vorgesehen sind, die hier ebenfalls durch die Querschnittserweiterung 15, die sich über die gesamte Breite der Gelenkelemente erstreckt, bereitgestellt werden. Ferner weisen die Haltebereiche 13 der Gelenkelemente (siehe Figur 2a, 2c) Mittel auf, die die Gelenkelemente 8 gegen eine Querverschiebung zu den Laschen 2 sichern, welche hier als zusätzliche Formschlussmittel in Form einer in die Querschnittserweiterung 15 eingebrachten, sich über einen Umfangsbereich erstreckenden Nut 16a ausgeführt sind (Fig. 2b, d), in welche ein korrespondierender Vorsprung der Lasche 2 eingreift. Der Haltebereich des Gelenkelementes einschließlich der Querschnittserweiterung wird eng bzw. im Presssitz von der Lasche umschlossen.

Das Gelenkelement ist durch die weiter unten beschriebene Ausgestaltung der Laschen von in Kettenlängsrichtung und/oder Querrichtung wirkenden Zug- und/oder Druckkräften praktisch vollständig entlastet.

Das Gelenkelement ist auf halber Höhe der Laschen 2 angeordnet. Der Abstand der Mittelpunkte beider Gelenkelemente einer Lasche beträgt weniger als die Höhe der Lasche, hier ca. der halben Höhe, so dass die Laschen relativ schmal ausgebildet sind, was die Abrolleigenschaften der Kette verbessert. Die Laschen 2 und die als separate Bauteile ausgeführten Gelenkelemente 8 bestehen aus unterschiedlichen Kunststoffmaterialien.

An den der jeweils benachbarten Lasche zugewandten Stirnseiten 16, 17 der Laschen (Fig. 2c) sind auf Höhe der Gelenkelemente 8 stirnseitig offene Ausnehmungen 18 vorgesehen, die sich in die Laschen 2 hineinerstrecken. Der die Ausnehmung 18 begrenzende Rand 19 der Lasche weist ober- und unterhalb des Gelenkelementes 8 einen Abstand zu diesem auf, der hier größer als die Stärke des Gelenkelementes 8 ist, so dass eine Biegung des Gelenkelementes über einen größeren Biegeradius möglich ist. Bei montierter Energieführungskette ergänzen sich die einander zugewandten Ausnehmungen 18 der benachbarten Laschen zu einer gemeinsamen Ausnehmung, die sich über die gesamte Länge des elastisch deformierbaren mittleren Bereichs 12 des Gelenkelementes erstreckt. Die Länge des mittleren deformierbaren Bereichs des Gelenkelementes entspricht ca. 40 % der Gesamtlänge und der vierfachen Wandstärke desselben.

Die Laschen 2 weisen ferner gemäss Figur 2 Überlappungsbereiche 20 bis 23 auf, die paarweise mit Überlappungsbereichen der beiden benachbarten Laschen überlappen, wodurch die Seitenstabilität der Kettenglieder wesentlich erhöht wird. Die Überlappungsbereiche 20 bis 23 stehen von einem mittleren Bereich 24 der Laschen stirnseitig in Richtung auf die benachbarten Laschen vor, wobei der mittlere Bereich 24 verglichen mit den Überlappungsbereichen eine größere Wandstärke aufweist. Jedem der benachbarten Laschen sind somit zwei Überlappungsbereiche 20, 22 bzw. 21, 23 zugeordnet, die jeweils oberhalb (20, 21) bzw. unterhalb (22, 23) des Gelenkelementes 8 angeordnet sind und durch eine sich über die Breite der Laschen erstreckende Aussparung 24b getrennt sind. Die Aussparung wird hier durch die freien Stirnseiten der Überlappungsbereiche begrenzt, so dass die Laschen eine nur geringe Länge aufweisen können. Einer der Überlappungsbereiche ist jeweils an der innen liegenden Seitenfläche 9, der jeweils andere Überlappungsbereich, der derselben benachbarten Lasche zugeordnet ist, an der äußeren Seitenfläche 10 der Lasche angeordnet. Die Überlappungsbereiche 20 und 21 bzw. 22 und 23 liegen somit auf gegenüberliegenden Seiten der Laschenhauptebene E (siehe Figur 2b,d).

Die Ausdehnung der Überlappungsbereiche 20 bis 23 entspricht somit im Wesentlichen der Winkelerstreckung des Verschwenkwinkels zusätzlich zu der Stärke der Vorsprünge 25 bis 28, die als Mittel zur Aufnahme von in Längsrichtung der Energieführungskette wirkenden Zugkräften und/oder Druckkräften und unabhängig hiervon oder gleichzeitig als Anschläge dienen können. Drei der Stirnseiten 20a, 22a, 23a der Überlappungsbereiche 20, 22, 23 stehen senkrecht zur Längsrichtung der Energieführungskette, wobei die vierte Stirnseite 21a des Überlappungsbereichs 21 mit der Energieführungskettenlängsrichtung einen Winkel W2 einschließt, der im Wesentlichen dem Verschwenkwinkel entspricht (Fig. 2c). Der Überlappungsbereich 21 ist somit an einer im Wesentlichen senkrecht zur Kettenlängsrichtung stehenden Stirnfläche des mittleren Laschenbereichs 24 angeordnet. Die Laschen weisen somit im Wesentlichen die Form zweier schiefwinkliger Parallelogramme auf, die zur Kettenlängsrichtung und zur entgegengesetzten Richtung schräggestellt sind. Die Stirnflächen eines Überlappungsbereichs sowie des mittleren Bereichs 24, d. h. die Flächen 21a und 24d sind hierbei fluchtend zueinander angeordnet, die Flächen 20a und 22a bzw. 23a und 24e weisen einen Längsversatz in Richtung der Energieführungskette auf (Fig. 2e).

Der mittlere Bereich 24a der Laschen, von dem die Überlappungsbereiche stirnseitig abgehen, weist somit zur Kettenlängsrichtung schräg verlaufenden Stirnseiten auf, so dass der mittlere Bereich sich auf beiden Stirnseiten sowie ober- und unterhalb der Gelenkelemente in Richtung auf die obere und untere Begrenzungsfläche verjüngt. Der mittlere Bereich besteht somit aus zwei im Wesentlichen dreieckigen oder trapezförmigen Bereichen, deren breite Basis auf Höhe der Gelenkelemente aneinander liegen.

Ferner wird zwischen mindestens einem der Querstege 4a, 4b und einem Überlappungsbereich ein Spalt 45 ausgebildet (Figur 1), in den in einer Anschlagstellung der Kettenglieder ein Überlappungsbereich des benachbarten Kettengliedes eingreifen kann. Nach dem Ausführungsbeispiel ist dies für die Anschlagstellungen bei geradliniger und vollständig verschwenkter Anschlagstellung gegeben.

An den Überlappungsbereichen 20 bis 23 sind jeweils seitlich in Richtung auf den Überlappungsbereich der benachbarten Lasche vorstehende Vorsprünge 25 bis 28 angeordnet, die die Vorsprünge des seitlich gegenüberliegenden Überlappungsbereichs der benachbarten Lasche hintergreifen (Fig. 2d, e). Die Vorsprünge 26, 28 der Lasche 3, die einander diametral gegenüberliegen, sind hierbei Bestandteil eines Randes einer seitlich offenen Ausnehmung 30, 31. Aufgrund der paarweisen Anordnung der Überlappungsbereiche 20, 23 bzw. 21, 22 an gegenüberliegenden Seitenflächen der Laschen und der seitlich von den Überlappungsbereichen vorstehenden Vorsprünge 25 bis 28 sind die Laschen unter Verdrehung derselben aus der Laschenhauptebene aneinander vormontierbar, wonach anschließend die Gelenkelemente 8 in die Ausnehmungen 11 seitlich eingeführt werden können.

Des Weiteren sind die jeweils benachbarten Laschen mit einander in der Höhe übergreifenden Vorsprüngen versehen, die zumindest oder ausschließlich in der Anschlagstellung der benachbarten Kettenglieder bei gestreckter Anordnung der Energieführungskette einen Höhenversatz der benachbarten Laschen bzw. Kettenglieder zueinander verhindern. Vorzugsweise wird der Höhenversatz ausschließlich in der Anschlagstellung bei gestreckter Energieführungskette vollständig verhindert, so dass bei der Verschwenkbewegung der Kettenglieder zueinander eine Reibung von Bereichen der Kettenglieder aufeinander verhindert wird. Hierzu können die bogenförmigen Abschnitte 35 bis 38 (siehe Figur 2c), die die von den Überlappungsbereichen seitlich vorstehenden Vorsprünge 25, 27 ober- bzw. unterseitig umgreifen, nichtkreisbogenförmig ausgeführt sein, so dass einer oder beide Vorsprünge 25, 27 in der Anschlagstellung der Kettenglieder bei gestreckter Energieführungskette und/oder vollständig abgewinkelter Kette mit der jeweiligen Oberseite 40, 41 (Fig. 2d) unter Verhinderung eines Höhenversatzes an den bogenförmigen Abschnitten anliegen. Es versteht sich, dass ein Höhenversatz auch dann verhindert wird, wenn die Ober- bzw. Unterkanten 40, 41 der Vorsprünge 25, 27 an den Abschnitten 36, 37 anliegen oder wenn Unter- und Oberkante eines Vorsprunges an den Abschnitten 36 und 38 anliegen. Zur Verhinderung eines Höhenversatzes können zusätzlich oder alternativ auch andere miteinander wechselwirkende Flächen vorgesehen sein. Gleichzeitig ist nach dem Ausführungsbeispiel Lage und Krümmung der bodenförmigen Abschnitte 36, 37 und der diesen zugewandten Flächen 40, 41 der Vorsprünge 25, 26 so gewählt, dass die benachbarten Kettenglieder in den Anschlagstellungen bei gestreckter und/oder gekrümmter Energieführungskette miteinander Verkeilen, indem sich die Vorsprünge an den bogenförmigen Flächen festsetzen und nur gegen eine geringe Kraft, die der Bewegung in die Anschlagstellung entgegengerichtet ist, voneinander lösbar sind. Das Höhenspiel der benachbarten Laschen zueinander besitzt in den beiden Anschlagstellungen somit ein Untermaß. Hierdurch wird in den Anschlagstellungen eine zusätzliche Steifigkeit der Kette erzielt.

Die Seitenlaschen 2 sind mit Paaren von korrespondierenden Anschlägen 50, 51 bzw. 52, 53 (Fig. 2e) versehen, die den Verschwenkwinkel bei linearer und bei verschwenkter Stellung der Kettenglieder zueinander begrenzen. Die Anschläge sind als kastenartige Vorsprünge ausgebildet, die von den mittleren Bereichen 24 der Laschen sich in der Hauptebene E der Laschen in Richtung auf die gegenüberliegende Lasche erstrecken, wobei nach dem Ausführungsbeispiel die vorstehenden Anschläge an den Laschen einander diametral gegenüberliegen und in Einbuchtungen in den korrespondierenden mittleren Bereichen der benachbarten Laschen eingreifen können. Die Anschläge grenzen hierbei unmittelbar an die Ausnehmungen 18 an, die die Gelenkelemente umgeben. Neben den Anschlägen 50 bis 53 können weitere Flächen der Laschen als Anschlagflächen zur Begrenzung der Verschwenkbewegungen dienen, beispielsweise die stirnseitigen Flächen der Vorsprünge 25, 27 oder die Stirnseiten der Überlappungsbereiche bzw. des mittleren Bereichs 24. Gleichzeitig können die die Anschläge 50 bis 53 auf der dem Gelenkelement 8 abgewandten Seite begrenzenden Flächen 55, 56 (Fig. 2c) den Höhenversatz der benachbarten Laschen zueinander begrenzen.

In den taschenartigen Einbuchtungen zur Aufnahme der als Anschläge wirkenden Vorsprünge sind als Mittel zur Geräuschdämpfung der bei der Betätigung der Anschläge entstehenden Geräusche Streifen 29 eines elastisch deformierbaren Materials mit höherem Elastizitätsmodul als das des Laschenmaterials auf der Anschlagfläche 28a für den Anschlag eingebracht. Alternativ oder zusätzlich kann, wie der Einfachheit halber an der gleichen Lasche veranschaulicht ist, der die Einbuchtung begrenzende Steg 29a elastisch deformierbar ausgeführt sein, wozu dieser aus einer geeigneten Wandstärke oder einem Material mit höherem Elastizitätsmodul als die angrenzenden Laschenabschnitte besteht.

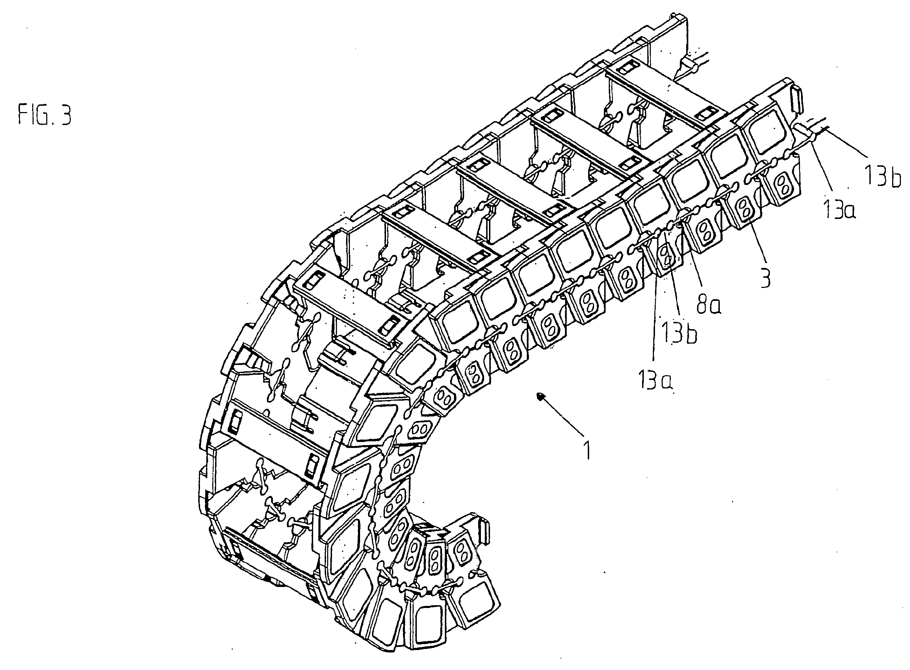

Figur 3 zeigt eine Abwandlung der Energieführungskette nach Figur 1, wobei der Unterschied darin besteht, dass sich das Gelenkelement 8a über mehrere Laschen, jeweils 4, erstreckt und mehrere in Kettenlängsrichtung unmittelbar aufeinander folgende Laschen gelenkig miteinander verbindet. Zwischen den Haltebereichen 13a der Gelenkelemente 8a sind Verbindungsstücke 13b vorgesehen, die eine geringere Breite als die Haltebereiche 13a aufweisen und in Nuten der Laschen angeordnet sind. Eine Vielzahl von Gelenkelementen 8a ist vorgesehen, um die Laschen eines Laschenstranges miteinander zu verbinden.

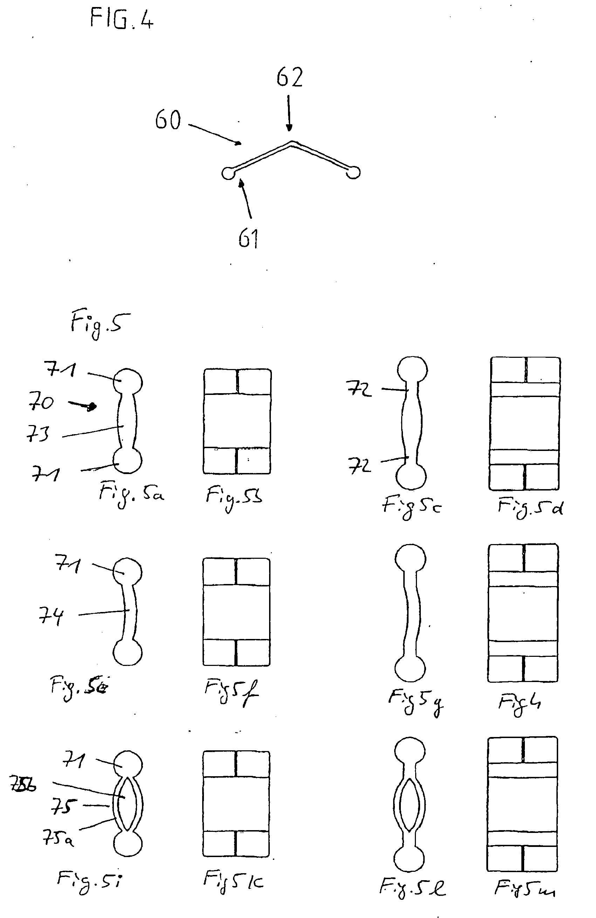

Figur 4 zeigt eine Abwandlung eines Gelenkelementes nach Figur 1 und 2, das im Unterschied zu diesem im demontierten Zustand nichtgestreckt ausgeführt ist. Das Gelenkelement 60 weist einen abgewinkelten mittleren Bereich 62 auf, der elastisch deformierbar ist, sowie an den beiden freien Enden Haltebereiche 61, für die das zu dem Gelenkelement nach Fig. 1 und 2 Gesagte gilt. Das Gelenkelement kann auch eine bogenförmige oder anders gekrümmte Gestalt aufweisen. Es kann auch wie das Gelenkelement 8a nach Figur 3 mehrere Laschen miteinander gelenkig verbinden.

Das Gelenkelement 60 kann in gestreckter Anordnung in Ausnehmungen der Laschen demontiert werden und so bei gestreckter Kette unter Vorspannung an den Laschen anliegen. Es kann auch ohne Vorspannung in entsprechend gestalteten Ausnehmungen der Laschen angeordnet sein.

Das Gelenkelement kann auch durch andere Modifizierung an die jeweiligen Erfordernisse angepasst erden, z.B. durch Einschnürungen im elastisch deformierbaren Bereich, die z.B. in Art eines Filmscharniers ausgeführt sein kann.

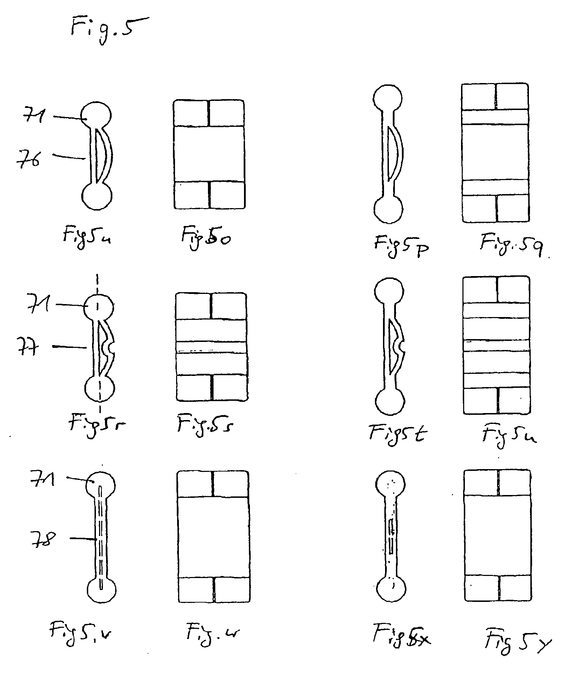

Figur 5 zeigt verschiedene Gelenkelemente 70 mit unterschiedlichen Querschnitten bzw. Materialstärken zwischen den jeweils gegenüberliegenden Haltebereichen 71 zur Festlegung an benachbarten Laschen. Die Halteelemente in den beiden rechten Spalten unterscheiden sich von denen der beiden linken Spalten jeweils durch die zwischen den Haltebereichen 71 und den mittleren Bereich mit unterschiedlichen Querschnittsgeometrien oder Materialstärken durch Verbindungsbereiche 72 mit jeweils gleichbleibendem Querschnitt bei gleicher Ausgestaltung der mittleren Gelenkbereiche 73-78. Es versteht sich, dass auch die Ausgestaltung der Verbindungsbereiche variabel ist.

Der Gelenkbereich 73 nach Fig. 5a verdickt sich von den Haltebereichen 71 zur Mitte des Gelenkelementes hin in der Richtung der Laschenhauptebene bei montiertem Gelenkelement. Die Verdickung erfolgt hier kontinuierlich und in Richtung auf die Mitte hin in abnehmendem Ausmaß.

Nach Fig. 5e,f ist der mittlere Gelenkbereich 74 bogenförmig ausgebildet, wobei der Bogen in der Laschenhauptebene bei montiertem Gelenkelement gewölbt ist.

Nach Fig. 5i,k besteht der mittlere Gelenkbereich 75 aus zwei gegensinnig nach außen gewölbten Materialsträngen 75a mit einem dazwischenliegenden beidseitig offenen Hohlraum 75b. Die Materialstränge nach Fig. 51 haben insgesamt die Stärke des Verbindungsbereichs, ohne hierauf beschränkt zu sein.

Fig. 5n,o zeigt ein Gelenkelement mit mittlerem Gelenkbereich 76 aus mehreren, hier zwei, Materialsträngen unterschiedlicher Geometrie. Ein Materialstrang ist hierbei geradlinig, der andere nach außengebogen.

Fig. 5r,s zeigt eine Abwandlung des Gelenkelementes nach Fig. 5n,o wobei einer der Materialstränge, hier der gewölbte, eine zur Mittellinie (gestrichelt) hin weisende Einbuchtung aufweist, die eine Abwinkelung in der Laschenhauptebene bei montiertem Gelenkelement erleichtert.

Fig. 5v,w zeigt ein Gelenkelement bei dem der mittlere Gelenkbereich 78 bei gleichbleibendem Außenquerschnitt eine Materialschwächung in Form eines inneren Hohlraumes (gestrichelt) aufweist, der hier nach außengeschlossen ist. Alternativ kann z.B. der mittlere Gelenkbereich auch geschlitzt sein, vorzugsweise ist die Schlitzebene senkrecht zur Laschenhauptebene oder Abwinkelungsebene angeordnet.

### Gelenkelement für Energieführungskette

### Bezugszeichenliste

- 1: Energieführungskette
- 2: Kettenglied
- 3: Lasche
- 4a,4b: Quersteg
- 5: Untertrum
- 6: Umlenkbereich
- 7: Obertrum
- 8, 8a: Gelenkelement
- 9, 10: Seitenfläche
- 11: Ausnehmung
- 12: mittlerer Bereich
- 13,13a: Haltebereich
- 13b: Verbindungsbereich
- 14: Fläche
- 15: Querschnittserweiterung
- 16, 17: Stirnseite
- 16a: Nut
- 18: Ausnehmung
- 19: Rand
- 20-23: Überlappungsbereich
- 24: mittlerer Bereich
- 24a: Steg
- 24b: Aussparung
- 25-28: Vorsprung
- 28a: Anschlagfläche
- 29: Dämpfungsstreifen
- 29a: Steg
- 30, 31: Ausnehmung
- 35-38: gebogener Abschnitt
- 40, 41: Oberseite
- 45: Spalt
- 50-53: Anschlag
- 55, 56: Begrenzungsfläche
- 60: Gelenkelement
- 61: Haltebereich
- 62: mittlerer Bereich
- 70: Gelenkelement
- 71: Haltebereich
- 72: Verbindungsbereich
- 73-78: mittlerer Gelenkbereich
- 75a: Materialstrang
- 75b: Hohlraum
- E: Laschenhauptebene
- R: Richtung
- W1, W2: Winkel

## Patentansprüche

1. Gelenkelement für eine Energieführungskette (1) zur Führung von Schläuchen, Kabeln oder dergleichen mit einer Anzahl von Kettengliedern (2), wobei die Kettenglieder (2) gegenüberliegenden Laschen (3) mit inneren und äußeren Seitenflächen (9,10) und dazu senkrechten und zur Längsrichtung der Kette im wesentlichen parallelen Schmalflächen aufweisen, mindestens einige der Kettenglieder mindestens einen die Laschen verbindenden Quersteg aufweisen, wobei das Gelenkelement (8, 8a, 60) angepasst ist, benachbarte Kettenglieder (2) jeweils gelenkig miteinander zu verbinden, wobei das Gelenkelement (8; 8a; 60) zwischen den Schmalflächen der Laschen (3) benachbarter Kettenglieder (2) anordenbar ist und die Energieführungskette (1) unter Bildung eines Untertrums (5), eines Umlenkbereichs (6) und eines Obertrums (7) verfahrbar ist, wobei das Gelenkelement (8; 8a, 60) als separates Bauteil ausgeführt ist, welches in einer Richtung, welche bei an der Energieführungskette (1) montiertem Gelenkelement (8; 8a;60) der Abwinkelungsrichtung der Kettenglieder (2) entspricht, elastisch deformierbar ist, **dadurch gekennzeichnet, dass** das Gelenkelement (8) als Federelement ausgeführt ist, welches nach dessen Abbiegung aus dessen langgestreckter Ruhestellung bei einer Abwinkelung benachbarter Kettenglieder einer zugeordneten Energieführungskette elastische Rückstellkräfte auf die Kettenglieder (2) ausübt, die eine zumindest teilweise Rückstellbewegung der Kettenglieder (2) gegen die Abwinkelungsrichtung bewirken, dass das Gelenkelement (8; 8a; 60) Haltebereiche (13; 13a; 61; 71) aufweist, mit denen es an den benachbarten Laschen (3) kraft-, form- und/oder stoffschlüssig befestigbar ist, es als im wesentlichen plattenartiges Bauteil ausgeführt ist, das insbesondere bei Anordnung in Längsrichtung der Energieführungskette (1) zwischen seinen Haltebereichen (13; 13a, 61; 71) zur Wechselwirkung mit den Laschen (3) einen sich ändernden Querschnitt aufweist, und es sich bezogen auf eine zugeordnete Energieführungskette (1) in Montageanordnung zumindest teilweise oder gänzlich zwischen der inneren und äußeren Seitenfläche (9, 10) der Laschen (3) erstreckt, so dass es von den inneren und äußeren Seitenflächen (9, 10) der Laschen (3) auf Höhe der Gelenkelemente seitlich nicht vorsteht.

2. Gelenkelement nach Anspruch 1, **dadurch gekennzeichnet, dass** das Gelenkelement (8) bandförmig ausgeführt ist.

3. Gelenkelement nach einem der Ansprüche 1 bis 2,
**dadurch gekennzeichnet, dass** die Länge mindestens eines elastisch deformierbaren Bereichs des Gelenkelementes jeweils ein mehrfaches der Stärke des Gelenkelementes in Abwinkelungsrichtung der Kettenglieder (2) einer zuordenbaren Energieführungskette beträgt.

4. Gelenkelement nach einem der Ansprüche 1 bis 3,
**dadurch gekennzeichnet, dass** das Gelenkelement (8) als gekrümmtes Bauteil ausgebildet ist, welches in Anordnung einer zuordenbaren Energieführungskette in der Ebene parallel zu den inneren und äußeren Seitenflächen der Laschen gekrümmt anordenbar ist.

5. Gelenkelement nach einem der Ansprüche 1 bis 4,
**dadurch gekennzeichnet, dass** das Gelenkelement (8) Mittel zur Verschiebungssicherung in Längsrichtung einer zuordenbaren Energieführungskette (1) aufweist, welche an den Laschen (3) befestigbar sind.

6. Gelenkelement nach einem der Ansprüche 1 bis 5,
**dadurch gekennzeichnet, dass** an dem Gelenkelement (8) Mittel zur Sicherung des Gelenkelementes (8) gegen eine Drehbewegung quer zu den Laschen (2) einer Energieführungskette vorgesehen sind, welche zur Zusammenwirkung mit entsprechenden Mitteln der Laschen (2) versehen sind.

7. Gelenkelement nach einem der Ansprüche 1 bis 6,
**dadurch gekennzeichnet, dass** das Gelenkelement (8, 8a) eine Mehrzahl von Haltebereichen aufweist, um eine Anzahl von Laschen (3) einer zuordenbaren Energieführungskette gelenkig miteinander zu verbinden, wobei die Anzahl der Laschen zwischen zwei und einer Anzahl liegt, die geringer als oder gleich der Anzahl der die Energieführungskette (1) bildenden Kettenglieder (2) ist.

8. Gelenkelement nach einem der Ansprüche 1 bis 7,
**dadurch gekennzeichnet, dass** das Gelenkelement (2) an benachbarten Laschen (3) einer zuordenbaren Energieführungskette festlegbare Haltebereiche aufweist, und dass zwischen den Haltebereichen zumindest zwei Bereiche des Gelenkelementes (8) mit zumindest einer unterschiedlichen Eigenschaft ausgewählt aus der Gruppe Querschnitt, Materialstärke, Elastizitätsmodul vorgesehen ist.

9. Gelenkelement nach einem der Ansprüche 1 bis 8,
**dadurch gekennzeichnet, dass** das Gelenkelement (8) Haltebereiche zum Eingriff in benachbarte Seitenlaschen einer zuordenbaren Energieführungskette aufweist, die ausgebildet sind, um in Längsrichtung der Energieführungskette wirkende Zugkräfte aufzunehmen.

10. Gelenkelement nach einem der Ansprüche 1 bis 9, **dadurch gekennzeichnet, dass** die Haltebereiche der Gelenkelemente Mittel (15, 16a) zur Sicherung des Gelenkelementes gegen Querverschiebung zu Laschen (2) einer zuordenbaren Energieführungskette (1) aufweisen.

11. Gelenkelement nach einem der Ansprüche 1 bis 10, **dadurch gekennzeichnet, dass** zwischen Haltebereichen (13a) des Gelenkelementes zur Wechselwirkung mit korrespondierenden Haltebereichen einer zuordenbaren Energieführungskette Verbindungsstücke (13b) vorgesehen sind, die eine geringere Breite als die Haltebereiche (13a) aufweisen.

12. Gelenkelement nach einem der Ansprüche 1 bis 11, **dadurch gekennzeichnet, dass** ein Gelenkbereich (73) vorgesehen ist, der sich von den Haltebereichen (71) zur Mitte des Gelenkelementes hin in der Richtung der Laschenhauptebene der Laschen einer zuordenbaren Energieführungskette hin verdickt.

13. Gelenkelement nach einem der Ansprüche 1 bis 12, **dadurch gekennzeichnet, dass** der mittlere Gelenkbereich (74) bogenförmig oder winkelförmig ausgebildet ist.

14. Gelenkelement nach einem der Ansprüche 1 bis 13, **dadurch gekennzeichnet, dass** der mittlere Gelenkbereich (75) aus zwei gegensinnig nach außen gewölbten Materialsträngen (75a) mit einem dazwischenliegenden beidseitig offenen Hohlraum (75b) besteht.

15. Gelenkelement nach einem der Ansprüche 1 bis 14, **dadurch gekennzeichnet, dass** der mittlere Gelenkbereich (76) aus mehreren Materialsträngen unterschiedlicher Geometrie besteht.

16. Gelenkelement nach Anspruch 15, **dadurch gekennzeichnet, dass** einer der Materialstränge eine zur Mittellinie hin weisenden Einbuchtung aufweist.

17. Gelenkelement nach einem der Ansprüche 1 bis 16,
**dadurch gekennzeichnet, dass** der mittlere Gelenkbereich (78) eine Materialschwächung in Form eines inneren Hohlraumes aufweist oder geschlitzt ausgeführt ist.

## Claims

1. Joint element for an energy guiding chain (1) for guiding hoses, cables or the like that has numerous chain links (2), where the chain links (2) have opposing straps (3) with inside and outside lateral surfaces (9, 10), and narrow surfaces perpendicular thereto and essentially parallel to the longitudinal direction of the chain, at least some of the chain links has at least one crossmember connecting the straps, where the joint element (8, 8a, 60) is adapted to connect adjacent chain links (2) to each other in articulated fashion, where the joint element (8, 8a, 60) can be located between the narrow surfaces of the straps (3) of adjacent chain links (2), and the energy guiding chain (1) can travel, forming a lower strand (5), a deflection zone (6) and an upper strand (7), where the joint element (8, 8a, 60) is designed as a separate component that is elastically deformable in a direction corresponding to the bending direction of the chain links (2), when the joint element (8, 8a, 60) is mounted on the energy guiding chain (1), **characterised in that** the joint element (8) is designed as a spring element that, upon being deflected from its elongated resting position when adjacent chain links of an associated energy guiding chain are bent, exerts elastic restoring forces on the chain links (2), said forces causing at least partial return motion of the chain links (2) against the direction of bending, **in that** the joint element (8, 8a, 60) has mounting areas (13; 13a; 61; 71) by means of which it can be attached to adjacent straps (3) by means of force-fitting, positivefitting and/or material bonding, it is designed as an essentially plate-like component that, in particular a component that, when arranged in the longitudinal direction of the energy guiding chain (1), has areas of changing cross-section between its mounting areas (13; 13a, 61; 71) for interacting with the straps (3), and **in that**, in assembled position, the joint element (8, 8a) extends at least partly, or completely, between the inside and outside lateral surface of the straps (3), when referring to an associated energy guiding chain (1), so that it does not protrude laterally from the inside and outside lateral surface of the straps (3) at the level of the joint element.

2. Joint element according to Claim 1, **characterised in that** the joint element (8) is of strip-like design.

3. Joint element according to one of Claims 1 to 2, **characterised in that** the length of at least one elastically deformable area of the joint element is in each case a multiple of the thickness of the joint element in the bending direction of the chain links (2) of an associated energy guiding chain.

4. Joint element according to one of Claims 1 to 3, **characterised in that** the joint element (8) is designed as a curved component which, in the arrangement of an associated energy guiding chain, can be arranged in curved fashion in the plane parallel to the inside and outside lateral surfaces of the straps.

5. Joint element according to one of Claims 1 to 4, **characterised in that** the joint element (8) has means for preventing shifting in the longitudinal direction of an associated energy guiding chain (1), said means being attachable to the straps (3).

6. Joint element according to one of Claims 1 to 5, **characterised in that** the joint element (8) is provided with means for preventing rotation of the joint element (8) transverse to the straps (3) of an energy guiding chain, said means being provided to interact with corresponding means of the straps (3).

7. Joint element according to one of Claims 1 to 6, **characterised in that** the joint element (8, 8a) has a plurality of mounting areas in order to connect a number of straps (3) of an associated energy guiding chain to each other in articulated fashion, where the number of straps is between two and a number that is less than or equal to the number of chain links (2) forming the energy guiding chain (1).

8. Joint element according to one of Claims 1 to 7, **characterised in that** the joint element (2) has mounting areas that can be fixed to adjacent straps (3) of an associated energy guiding chain, and **in that** at least two areas of the joint element (8) are provided between the mounting areas that have at least one different characteristic, selected from the group comprising material thickness and modulus of elasticity.

9. Joint element according to one of Claims 1 to 8, **characterised in that** the joint element (8) has mounting areas for engaging adjacent side straps of an associated energy guiding chain, said areas being designed to absorb tensile forces acting in the longitudinal direction of the energy guiding chain.

10. Joint element according to one of Claims 1 to 9, **characterised in that** means (15, 16a) are provided for preventing the joint element from shifting transverse to the straps (3) of an associated energy guiding chain (1).

11. Joint element according to one of Claims 1 to 10, **characterised in that** connecting pieces (13b) with a smaller width than the mounting areas (13a) are provided between the mounting areas (13a) of the joint element for interacting with corresponding mounting areas of an associated energy guiding chain.

12. Joint element according to one of Claims 1 to 11, **characterised in that** a joint area (73) is provided, which becomes thicker from the mounting areas (71) towards the centre of the joint element in the direction of the principal strap plane of the straps of an associated energy guiding chain.

13. Joint element according to one of Claims 1 to 12, **characterised in that** the central joint area (74) is of arc-shaped or angular design.

14. Joint element according to one of Claims 1 to 13, **characterised in that** the central joint area (75) consists of two material strands (75a), which curve outwards in opposite directions and form a cavity (75b) open on both sides in between.

15. Joint element according to one of Claims 1 to 14, **characterised in that** the central joint area (76) consists of several material strands of different geometries.

16. Joint element according to Claim 15, **characterised in that** one of the material strands has a bulge pointing towards the centre line.

17. Joint element according to one of Claims 1 to 16, **characterised in that** the central joint area (78) has an area of thinner material in the form of an internal cavity, or is of slotted design.

## Revendications

1. Élément d'articulation pour une chaîne de guidage (1) d'énergie destinée au guidage de tuyaux, de câbles ou similaires et comprenant un certain nombre de maillons de chaîne (2), les maillons de chaîne (2) comprenant des pattes (3) opposées avec des surfaces latérales intérieure et extérieure (9, 10) et des petites surfaces parallèles à ces dernières et essentiellement parallèles à la direction longitudinale de la chaîne, au moins quelques-uns des maillons de chaîne comprenant au moins une entretoise reliant les pattes (3), l'élément d'articulation (8, 8a, 60) étant adapté à relier des maillons de chaînes voisins (2) l'un à l'autre et de façon articulée, l'élément d'articulation (8, 8a, 60) étant agencé entre les petites surfaces des pattes de maillons de chaînes voisins et la chaîne de guidage d'énergie (1) est mise en circulation en formant un brin inférieur (5), une zone de renvoi (6), et un brin supérieur (7), l'élément d'articulation (8a, 8b) étant réalisé sous la forme de composant séparé qui est élastiquement déformable dans une direction qui correspond à la direction de déflexion des maillons de chaîne, lorsque l'élément d'articulation (8, 8a, 60) est monté sur la chaîne de guidage d'énergie (1) **caractérisé en ce que** l'élément d'articulation (8) est réalisé sous forme d'élément-^{L}ressort qui, quand il est fléchi hors de sa position allongée de repos lors d'une déflexion de maillons de chaîne voisins dans une chaîne de guidage d'énergie associée, exerce des forces de rappel élastiques sur les maillons de chaîne (2), qui provoquent un mouvement de rappel au moins partiel des maillons de chaîne (2) à l'encontre de la direction de déflexion, **en ce que** l'élément d'articulation (8, 8a, 60) comprend des zones de maintien (13; 13a, 61; 71) par lesquels il peut être fixé aux pattes voisines par une liaison par la force, par la forme et/ou par la matière, qu'il est réalisé sous forme de composant essentiellement en forme de plaque, en particulier présentant une section variable entre ses zones de maintien (13; 13a, 61; 71) pour la coopération avec les pattes lors de l'agencement en direction longitudinale de la chaîne de guidage d'énergie, et **en ce que** l'élément d'articulation (8a, 8b) s'étend, par référence à une chaîne de guidage d'énergie associée (1) dans l'agencement de montage, au moins partiellement ou totalement entre la surface latérale intérieure et la surface latérale extérieure des pattes (3), de sorte à ne pas dépasser de la surface latérale intérieure ni de la surface latérale extérieure des pattes (3) au niveau de l'élément d'articulation.

2. Élément d'articulation selon la revendication 1, **caractérisé en ce que** l'élément d'articulation (8) est réalisé en forme de bande.

3. Élément d'articulation selon l'une des revendications 1 à 2, **caractérisé en ce que** la longueur d'au moins une zone élastiquement déformable de l'élément d'articulation s'élève respectivement à un multiple de l'épaisseur de l'élément d'articulation en direction de déflexion des maillons de chaîne (2) d'une chaîne de guidage d'énergie associée.

4. Élément d'articulation selon l'une des revendications 1 à 3, **caractérisé en ce que** l'élément d'articulation (8) est réalisé sous forme de composant incurvé qui, dans l'agencement d'une chaîne de guidage d'énergie associée, peut être agencé de façon incurvée dans le plan parallèle aux surfaces latérales intérieure et extérieure des pattes.

5. Élément d'articulation selon l'une des revendications 1 à 4, **caractérisé en ce que** l'élément d'articulation (8) comprend des moyens anti-^{L}translation en direction longitudinale d'une chaîne de guidage d'énergie associée (1), lesdits moyens pouvant être fixés sur les pattes (3).

6. Élément d'articulation selon l'une des revendications 1 à 5, **caractérisé en ce que** sur l'élément articulation (8) sont prévus des moyens pour bloquer l'élément d'articulation (8) à l'encontre d'un mouvement de rotation perpendiculaire aux pattes (2) d'une chaîne de guidage énergie, lesdits moyens étant prévus pour coopérer avec des moyens correspondants des pattes (2).

7. Élément d'articulation selon l'une des revendications 1 à 6, **caractérisé en ce que** l'élément d'articulation (8, 8a) comprend une pluralité de zones de maintien afin de relier les unes aux autres de façon articulée un certain nombre de pattes (3) d'une chaîne de guidage d'énergie associée, le nombre des pattes étant compris entre 2 et un nombre qui est inférieur ou égal au nombre des maillons de chaîne (2) formant la chaîne de guidage d'énergie (1).

8. Élément d'articulation selon l'une des revendications 1 à 7, **caractérisé en ce que** l'élément d'articulation (2) comprendre des zones de maintien susceptibles d'être immobilisée sur des pattes voisines (3) d'une chaîne de guidage d'énergie associée, et **en ce que**, entre les zones de maintien, sont prévues au moins deux zones de l'élément d'articulation (8) qui sont choisies avec au moins une propriété différente parmi le groupe comprenant l'épaisseur de matériau et le module d'élasticité.

9. Élément d'articulation selon l'une des revendications 1 à 8, **caractérisé en ce que** l'élément d'articulation (8) comprend des zones de maintien destinées à s'engager dans des pattes latérales voisines d'une chaîne de guidage d'énergie associée, lesdites zones étant réalisées afin d'encaisser des forces de traction agissant en direction longitudinale de la chaîne de guidage d'énergie.

10. Élément d'articulation selon l'une des revendications 1 à 9, **caractérisé en ce que** les zones de maintien des éléments d'articulation comprennent des moyens (15, 16a) pour bloquer l'élément d'articulation à l'encontre d'un déplacement transversal vers les pattes (2) d'une chaîne de guidage d'énergie associée (1).

11. Élément d'articulation selon l'une des revendications 1 à 10, **caractérisé en ce que**, entre des zones de maintien (13a) de l'élément d'articulation, sont prévues des pièces de liaison (13b) destinées à coopérer avec des zones de maintien correspondantes d'une chaîne de guidage d'énergie associée, lesdits pièces de liaison ayant une largeur inférieure à celle des zones de maintien (13a).

12. Élément d'articulation selon l'une des revendications 1 à 11, **caractérisé en ce qu'**il est prévu une zone d'articulation (73) qui, partant des zones de maintien 71) vers le milieu de l'élément d'articulation, va en s'épaississant en direction du plan principal des pattes d'une chaîne de guidage d'énergie associée.

13. Élément d'articulation selon l'une des revendications 1 à 12, **caractérisé en ce que** la zone d'articulation médiane (74) est réalisée en forme d'arc ou en forme d'équerre.

14. Élément d'articulation selon l'une des revendications 1 à 13, **caractérisé en ce que** la zone d'articulation médiane (75) est constitué de deux barrettes de matière (75a) bombées vers l'extérieur en sens opposés, avec une cavité intermédiaire (75b) ouverte des deux côtés.

15. Élément d'articulation selon l'une des revendications 1 à 14, **caractérisé en ce que** la zone d'articulation médiane (76) est constituée de plusieurs barrettes de matière de géométrie différente.

16. Élément d'articulation selon la revendication 15, **caractérisé en ce que** l'une des barrettes de matière présente un creux dirigé vers la ligne médiane.

17. Élément d'articulation selon l'une des revendications 1 à 16, **caractérisé en ce que** la zone d'articulation médiane (78) présente un affaiblissement de matériau sous la forme d'une cavité intérieure, ou est réalisée avec une fente.
